# EUROPÄISCHE PATENTANMELDUNG

(11) **EP 2 824 375 A1**
(43) Veröffentlichungstag der Anmeldung: **14.01.2015**
(21) Anmeldenummer: 13176393.0
(22) Anmeldetag: 12.07.2013
(51) Int. Cl.: F16L 37/092, F16L 37/098

(54) **Steckfitting und Steckvorrichtung mit einem Steckfitting und einer Rohrleitung**

(71) Anmelder: Roth Werke GmbH, 35232 Dautphetal (DE)
(72) Erfinder:
(74) Vertreter: Rohmann, Michael

(57) **Zusammenfassung**

Steckfitting, insbesondere für Trinkwasserinstallationen - mit einem Basisgehäuse 2 und zumindest einem aus dem Basisgehäuse 2 herausragenden Steckzapfen 3 zum Aufstecken einer Rohrleitung 4. Es ist ein den Steckzapfen 3 umgebender Krallring 5 vorhanden, wobei der Krallring 5 mit der Maßgabe ausgelegt ist, dass die auf den Steckzapfen 3 aufgeschobene Rohrleitung 4 kraftschlüssig in den Krallring 5 einschiebbar ist. Der Steckzapfen 3 und der darauf angeordnete Krallring 5 sind von einer zumindest bereichsweise transparenten Außenhülse 6 umgeben, so dass der Aufsteckfortschritt von außen erkennbar bzw. kontrollierbar ist.

## Beschreibung

Die Erfindung betrifft einen Steckfitting, insbesondere für Trinkwasserinstallationen - mit einem Basisgehäuse und zumindest einem aus dem Basisgehäuse herausragenden Steckzapfen zum Aufstecken einer Rohrleitung. Die Erfindung betrifft außerdem eine Steckvorrichtung mit einem Steckfitting und zumindest einer Rohrleitung. - Es liegt im Rahmen der Erfindung, dass ein fluides Medium durch die zumindest eine Rohrleitung und durch den Steckfitting geleitet wird. Dazu weist der Steckzapfen sowie der Basiskörper des Steckfittings zweckmäßigerweise einen geeigneten Durchlasskanal auf und es versteht sich, dass die Rohrleitung zur Durchleitung des fluiden Mediums innen hohl ausgebildet ist. Bei dem fluiden Medium handelt es sich insbesondere um Brauchwasser und vorzugsweise um Trinkwasser.

Steckfittings und Steckvorrichtungen der eingangs genannten Art sind aus der Praxis in verschiedenen Ausführungsformen bekannt. In der Regel wird die Rohrleitung kraftschlüssig und formschlüssig auf einen Steckzapfen des Steckfittings aufgesteckt. Der Steckzapfen weist dabei zweckmäßigerweise zumindest einen über seinen Umfang umlaufenden Dichtring auf, insbesondere in Form eines O-Ringes. Die aus der Praxis bekannten Steckfittings und Steckvorrichtungen weisen häufig den Nachteil auf, dass sie gegenüber dem durchzuleitenden fluiden Medium nicht ausreichend dicht sind. Das liegt oftmals daran, dass die Rohrleitung nicht sachgemäß bzw. nicht vollständig auf den Steckzapfen des Steckfittings aufgesteckt wurde. Bei den bekannten Steckfittings bzw. Steckfittingaggregaten besteht das Problem, dass die Länge des aufgesteckten Rohrleitungsendes bzw. der Aufsteckfortschritt der Rohrleitung nicht ohne Weiteres bzw. nicht ohne größeren Aufwand erkannt werden kann. Demgegenüber liegt der Erfindung das technische Problem zugrunde, einen Steckfitting der eingangs genannten Art anzugeben, bei dem die vorstehend geschilderten Nachteile effektiv und funktionssicher vermieden werden können. Der Erfindung liegt weiterhin das technische Problem zugrunde, eine entsprechende Steckvorrichtung mit Steckfitting und Rohrleitung anzugeben.

Zur Lösung dieses technischen Problems lehrt die Erfindung einen Steckfitting, insbesondere für Trinkwasserinstallationen, - mit einem Basisgehäuse und zumindest einem aus dem Basisgehäuse herausragenden Steckzapfen zum Aufstecken einer Rohrleitung, wobei ein den Steckzapfen umgebender Krallring vorhanden ist, wobei der Krallring mit der Maßgabe ausgelegt ist, dass die auf den Steckzapfen aufgeschobene bzw. aufgesteckte Rohrleitung kraftschlüssig und/oder formschlüssig in den Krallring zwischen Steckzapfen und Krallring einschiebbar ist und wobei der Steckzapfen und der darauf angeordnete Krallring von einer zumindest bereichsweise transparenten bzw. durchsichtigen Außenhülse umgeben sind, so dass der Aufsteckfortschritt bzw. der Einschubfortschritt der Rohrleitung von außen durch die zumindest bereichsweise transparente Außenhülse erkennbar bzw. kontrollierbar ist. - Nach einer Ausführungsform der Erfindung ist die gesamte Außenhülse transparent bzw. durchsichtig oder zumindest im Wesentlichen transparent bzw. durchsichtig ausgebildet. Gemäß einer anderen Ausführungsform der Erfindung ist zumindest ein Sichtbereich der Außenhülse transparent bzw. durchsichtig ausgebildet, durch welchen Sichtbereich der Aufsteckfortschritt bzw. der Einschubfortschritt der Rohrleitung von außen erkennbar ist. Dabei liegt es im Rahmen der Erfindung, dass der Rest der Außenhülse bzw. die übrigen Bereiche der Außenhülse opak ausgebildet sind.

Es wurde bereits eingangs dargelegt, dass Steckfitting und Rohrleitung innen hohl zur Durchleitung eines fluiden Mediums, insbesondere zur Durchleitung von Trinkwasser, eingerichtet sind. Der Steckzapfen weist an einem Stirnende eine Anschlussöffnung für das durch die Rohrleitung fließende fluide Medium auf. Der Steckfitting und/oder die Rohrleitung bestehen bevorzugt aus Kunststoff bzw. im Wesentlichen aus Kunststoff.

Es liegt im Rahmen der Erfindung, dass der Steckzapfen des Fittings mit der Maßgabe ausgebildet ist, dass die Rohrleitung formschlüssig und/oder kraftschlüssig auf den Steckzapfen aufschiebbar ist. Empfohlenermaßen weist der Steckzapfen zumindest eine über den Umfang des Steckzapfens umlaufende Dichtung auf, die zweckmäßigerweise in Form eines O-Ringes ausgebildet ist. Vorzugsweise liegt nach dem Aufschieben bzw. Aufstecken der Rohrleitung auf den Steckzapfen die Innenoberfläche der Rohrleitung formschlüssig und kraftschlüssig an dem Dichtungsring bzw. O-Ring an. Nach besonders bevorzugter Ausführungsform der Erfindung weist der Steckzapfen ein Sägezahnprofil zum formschlüssigen bzw. kraftschlüssigen Aufschieben der Rohrleitung auf. - Hier und nachfolgend werden im Übrigen für das Aufbringen der Rohrleitung auf den Steckzapfen die Begriffe Aufstecken und Aufschieben gleichrangig nebeneinander verwendet.

Gemäß empfohlener Ausführungsform ist die zumindest bereichsweise transparente bzw. durchsichtige Außenhülse des Fittings an dem Basisgehäuse des Fittings fixiert, vorzugsweise mit dem Basisgehäuse des Fittings verrastet. Zweckmäßigerweise weist hierzu die Außenhülse an ihrer Innenoberfläche einen über den Innenumfang der Außenhülse umlaufenden Rastring auf und bevorzugt weist das Basisgehäuse des Fittings eine dazu komplementäre bzw. im Wesentlichen komplementäre über den Außenumfang des Basisgehäuses umlaufende Rastnut auf. Es liegt im Rahmen der Erfindung, dass durch die Rastverbindung zwischen Außenhülse und Basisgehäuse des Fittings eine Relativbewegung zwischen Außenhülse und Basisgehäuse in Längsrichtung des Fittings vermieden bzw. im Wesentlichen vermieden wird.

Gemäß besonders bevorzugter Ausführungsform der Erfindung weist der Krallring an seiner steckzapfenseitigen Innenoberfläche zumindest einen Widerhaken auf. Es liegt im Rahmen der Erfindung, dass dieser zumindest eine Widerhaken beim Aufschieben der Rohrleitung bzw. beim Einschieben der Rohrleitung in den Krallring an der Außenoberfläche der Rohrleitung zur Anlage kommt bzw. sich in der Außenoberfläche der Rohrleitung verhakt bzw. verkrallt. Die Anlage bzw. Verhakung/Verkrallung des zumindest einen Widerhakens erfolgt dabei mit der Maßgabe, dass die Rohrleitung nicht bzw. nicht ohne Weiteres in der zur Aufsteckrichtung bzw. Einschubrichtung entgegengesetzten Richtung bewegbar ist. Eine sehr bevorzugte Ausführungsform der Erfindung ist dadurch gekennzeichnet, dass mehrere über den Innenumfang bzw. über die steckzapfenseitige Innenoberfläche des Krallringes verteilt angeordnete Widerhaken vorgesehen sind. Zweckmäßigerweise sind die Widerhaken dabei gleichmäßig und bevorzugt mit gleichen Abständen über den Innenumfang des Krallringes angeordnet. Eine empfohlene Ausführungsform der Erfindung ist dadurch gekennzeichnet, dass der zumindest eine Widerhaken bzw. dass die Widerhaken als metallische Widerhaken ausgebildet ist/sind. Es hat sich bewährt, dass der Widerhaken bzw. dass die Widerhaken als zur Längsachse des Fittings hin abgeschrägte bzw. geneigte plättchenförmige Zähne ausgebildet sind, vorzugsweise als metallische plättchenförmige Zähne ausgebildet sind.

Eine empfohlene Ausführungsform des erfindungsgemäßen Steckfittings ist dadurch gekennzeichnet, dass ein erster Anschlag, insbesondere ein erster Anschlagring vorgesehen ist, wobei der Krallring bei Kraftbeaufschlagung in Längsrichtung des Fittings zum Basisgehäuse hin - insbesondere bei Kraftbeaufschlagung durch die eingeschobene bzw. einzuschiebende Rohrleitung - gegen den ersten Anschlag, insbesondere gegen den ersten Anschlagring drückbar ist bzw. gedrückt wird. Nach bevorzugter Ausführungsform der Erfindung ist der erste Anschlag bzw. der erste Anschlagring Bestandteil des transparenten Außengehäuses. Es liegt im Rahmen der Erfindung, dass die Bewegung bzw. Längsbewegung des Krallringes durch den ersten Anschlag bzw. durch den ersten Anschlagring begrenzt/eingeschränkt wird. Zweckmäßigerweise läuft der erste Anschlagring über den Innenumfang des zumindest bereichsweise transparenten Außengehäuses um. Es empfiehlt sich, dass der Krallring eine Anschlagschulter bzw. eine über seinen Umfang umlaufende Anschlagschulter zur Anlage an dem ersten Anschlag bzw. an dem ersten Anschlagring aufweist.

Es liegt im Rahmen der Erfindung, dass der Krallring mit der Maßgabe ausgebildet ist, dass die Rohrleitung durch den Krallring über das basisgehäuseseitige Ende des Krallringes hinausschiebbar ist und dabei bevorzugt gegen eine Stirnfläche des Basisgehäuses schiebbar ist. Das bedeutet, dass die Rohrleitung nach dem Aufstecken auf den Steckzapfen bzw. nach dem Einschieben in den Krallring aus dem Krallring basisgehäuseseitig hervorragt. Zweckmäßigerweise ist der erste Anschlag, insbesondere der erste Anschlagring, bevorzugt der erste Anschlagring des Außengehäuses entsprechend angeordnet, so dass die Rohrleitung über den Krallring hinaus bis zum Basisgehäuse bzw. bis zu der Stirnfläche des Basisgehäuses schiebbar ist. Es liegt im Übrigen im Rahmen der Erfindung, dass der Krallring - wie weiter unten noch beschrieben - radial aufweitbar ist bzw. beim Einschieben bzw. Durchschieben der Rohrleitung radial bzw. ein wenig radial aufweitbar ist.

Gemäß besonders empfohlener Ausführungsform der Erfindung ist der den Steckzapfen umgebende Krallring in einem Krallringbereich bzw. in einem Krallringgehäuse des Fittings unverlierbar aufgenommen. Dieser Krallringbereich bzw. dieses Krallringgehäuse wird dabei zweckmäßigerweise durch Komponenten des Außengehäuses gebildet bzw. begrenzt. Dabei bildet empfohlenermaßen der erste Anschlag, insbesondere der erste Anschlagring, als Bestandteil des Außengehäuses, eine erste Begrenzung des Krallringbereiches/Krallringgehäuses. Diese erste Begrenzung schränkt die Bewegung bzw. Längsbewegung des Krallringes in Richtung Basisgehäuse ein. Nach einer erfindungsgemäßen Ausführungsvariante wird eine zweite Begrenzung des Krallringbereiches/Krallringgehäuses durch eine konusförmige Verjüngung des Außengehäuses zum Stirnende des Steckzapfens hin gebildet und/oder durch einen zweiten Anschlag, insbesondere durch einen zweiten Anschlagring gebildet, der bevorzugt Bestandteil des Außengehäuses ist. Wenn die zweite Begrenzung durch die genannte konusförmige Verjüngung gebildet wird, kann der Krallring aufgrund seines größeren Radius nicht durch den konusförmigen Bereich bzw. durch die konusförmige Verjüngung gelangen. Eine Ausführungsform der Erfindung zeichnet sich im Übrigen dadurch aus, dass sich der Krallring bzw. die Außenseite des Krallringes zum Stirnende des Steckzapfens hin verjüngt bzw. bevorzugt konisch verjüngt.

Es liegt im Rahmen der Erfindung, dass die Rohrleitung kraftschlüssig und/oder formschlüssig in den Krallring eingeschoben ist. In diesem Zusammenhang liegt es weiterhin im Rahmen der Erfindung, dass das Aggregat aus Krallring und darin eingeschobener bzw. aufgenommener Rohrleitung in Längsrichtung des Fittings verschiebbar ist - und dabei insbesondere der Krallring dieses Aggregates zwischen den Begrenzungen des Krallringbereiches bzw. Krallringgehäuses verschiebbar ist -, so dass das/ein über den Krallring zum Basisgehäuse hin vorkragendes Rohrleitungsende durch die zumindest bereichsweise transparente bzw. durchsichtige Außenhülse für eine Beobachtungsperson sichtbar ist. Es liegt dabei im Rahmen der Erfindung, dass das Aggregat auf dem Steckzapfen in Richtung Stirnende des Steckzapfens verschiebbar ist, so dass in einem zwischen Krallring und Basisgehäuse gebildeten Zwischenraum das über den Krallring vorkragende Rohrleitungsende durch die zumindest bereichsweise transparente Außenhülse sichtbar ist. Auf diese Weise kann eine Beobachtungs- bzw. Bedienungsperson einfach und problemlos den Einschub- bzw. Aufsteckfortschritt der Rohrleitung auf den Fitting feststellen/kontrollieren. Gemäß einer bevorzugten Ausführungsform der Erfindung ist die Außenhülse zumindest über dem zwischen Krallring und Basisgehäuse gebildeten Zwischenraum zumindest bereichsweise transparent ausgebildet, so dass das vorkragende Rohrleitungsende durch diesen transparenten Bereich der Außenhülse sichtbar ist. Insoweit kann über dem genannten Zwischenraum gleichsam ein Sichtfenster bzw. ein transparentes Sichtfenster zur Kontrolle angeordnet sein. Es liegt im Rahmen der Erfindung, dass ein weiterer Bereich bzw. der übrige Bereich der Außenhülse opak bzw. nicht transparent ausgebildet ist. - Es liegt weiterhin im Rahmen der Erfindung, dass die Verschiebung des Aggregates aus Krallring und darin eingeschobener Rohrleitung durch die Begrenzungen des Krallringbereiches/Krallringgehäuses eingeschränkt wird.

Wie oben bereits angedeutet ist nach besonders bevorzugter Ausführungsform der Krallring radial aufweitbar bzw. in radialer Richtung in Bezug auf seinen Umfang aufweitbar. Empfohlenermaßen weist dazu der Krallring eine sich in Längsrichtung des Fittings erstreckende Durchbrechung auf und der Krallring ist aufgrund dieser Durchbrechung radial aufweitbar. Es liegt dabei im Rahmen der Erfindung, dass sich die Durchbrechung über die gesamte Länge des Krallringes in Längsrichtung des Fittings erstreckt, so dass der Krallring keinen vollständigen Ring bildet. Es liegt weiterhin im Rahmen der Erfindung, dass sich die Durchbrechung über die gesamte radiale Dicke des Krallringes erstreckt. Vorzugsweise beträgt die Breite der Durchbrechung des Krallringes in Umfangsrichtung des Krallringes gesehen maximal 10 %, bevorzugt maximal 8 % des Umfanges des Krallringes.

Eine besonders empfohlene Ausführungsform der Erfindung ist dadurch gekennzeichnet, dass an der dem Basisgehäuse abgewandten Seite des Krallringes ein den Steckzapfen umgebender Manipulationsring angeordnet ist. Zweckmäßigerweise ist die auf den Steckzapfen aufgesteckte Rohrleitung kraftschlüssig und/oder formschlüssig in den Manipulationsring einschiebbar. Der Manipulationsring dient gleichsam zur Abstützung der auf den Steckzapfen aufgesteckten Rohrleitung. - Vorzugsweise wird der Manipulationsring bei Kraftbeaufschlagung in Längsrichtung des Fittings zum Basisgehäuse hin - insbesondere beim Aufschieben bzw. Einschieben einer Rohrleitung zum Basisgehäuse hin - gegen einen äußeren Anschlag, insbesondere gegen einen äußeren Anschlagring gedrückt. Vorzugsweise ist der äußere Anschlag bzw. der äußere Anschlagring Bestandteil der Außenhülse des Fittings. Es liegt im Rahmen der Erfindung, dass der Manipulationsring einen ringförmigen Anschlagflansch zur Anlage an dem äußeren Anschlag bzw. an dem äußeren Anschlagring aufweist. Der äußere Anschlag bzw. äußere Anschlagring schränkt die Längsbewegung des Manipulationsringes, in Richtung Basisgehäuse ein. Von daher wird durch den äußeren Anschlag bzw. durch den äußeren Anschlagring ein Vordringen bzw. ein weiteres Vordringen des Manipulationsringes in den Krallringbereich/in das Krallringgehäuse des Krallringes begrenzt bzw. verhindert.

Nach sehr empfohlener Ausführungsform des erfindungsgemäßen Steckfittings weist der Manipulationsring an seinem basisgehäuseseitigen Ende bzw. Stirnende zumindest bereichsweise eine zur Längsachse des Fittings und zum Krallring hin geneigte bzw. abgeschrägte Manipulationsfläche auf, so dass beim Ziehen bzw. Drücken des Krallringes gegen den Manipulationsring und/oder umgekehrt die Manipulationsfläche zumindest zum Teil bzw. zum Teil in den Krallring einfasst und der Krallring dadurch radial aufgeweitet wird. Es liegt im Rahmen der Erfindung, dass die Manipulationsfläche konusförmig bzw. im Wesentlichen konusförmig ausgebildet ist.

Eine empfohlene Ausführungsform der Erfindung zeichnet sich dadurch aus, dass der Manipulationsring eine Anschlagfläche aufweist, welche Anschlagfläche bei einer Bewegung bzw. bei einer Verschiebung des Manipulationsringes in Richtung der dem Basisgehäuse abgewandten Seite des Fittings an einem inneren Anschlag, insbesondere an einem inneren Anschlagring des Fittings zur Anlage kommt, so dass der Manipulationsring unverlierbar in dem Fitting gehalten wird. Vorzugsweise kommt die Anschlagfläche des Manipulationsringes an einem inneren Anschlag, insbesondere an einem inneren Anschlagring der Außenhülse zur Anlage, so dass der Manipulationsring unverlierbar in der Außenhülse des Fittings gehalten wird. Es empfiehlt sich, dass die Anschlagfläche des Manipulationsringes durch eine Hinterschneidung der Manipulationsfläche gebildet wird. Nach einer bevorzugten Ausführungsvariante wird der innere Anschlag bzw. der innere Anschlagring durch die Rückseite des äußeren Anschlags bzw. durch die Rückseite des äußeren Anschlagringes gebildet. In diesem Fall bilden innerer Anschlag und äußerer Anschlag bzw. innerer Anschlagring und äußerer Anschlagring zweckmäßigerweise eine einzige Komponente und bevorzugt eine einzige Komponente der transparenten Außenhülse.

Eine bewährte Ausführungsform der Erfindung zeichnet sich dadurch aus, dass der Manipulationsring zumindest eine sich in seiner Längsrichtung bzw. in Längsrichtung des Fittings erstreckende Ausnehmung aufweist und dass sich die Ausnehmung vorzugsweise über lediglich einen Teil der Länge des Manipulationsringes erstreckt. Vorzugsweise ist die zumindest eine Ausnehmung des Manipulationsringes an dem dem Basisgehäuse des Fittings zugewandten Ende des Manipulationsringes vorgesehen. Es liegt im Rahmen der Erfindung, dass sich die zumindest eine Ausnehmung über die gesamte radiale Dicke des Manipulationsringes erstreckt. Empfohlenermaßen erstreckt sich die zumindest eine Ausnehmung über zumindest 50 %, bevorzugt über zumindest 60 % und sehr bevorzugt über zumindest 70 % der Länge des Manipulationsringes in Längsrichtung des Fittings gesehen.

Eine sehr bevorzugte Ausführungsform der Erfindung ist dadurch gekennzeichnet, dass der Manipulationsring eine Mehrzahl von über seinen Umfang verteilte Ausnehmungen aufweist. Zweckmäßigerweise sind diese Ausnehmungen gleichmäßig über den Umfang des Manipulationsringes verteilt angeordnet und besonders bevorzugt mit gleichen Abständen zueinander angeordnet. Bei dieser Ausführungsform mit einer Mehrzahl von Ausnehmungen wird die Manipulationsfläche des Manipulationsringes von zwischen den Ausnehmungen angeordneten Manipulationsflächenabschnitten an den ausnehmungsfreien Ringabschnitten gebildet. Dann wird empfohlenermaßen die Anschlagfläche des Manipulationsringes durch als Hinterschneidungen an den Manipulationsflächenabschnitten ausgeführte Anschlagflächenabschnitte gebildet. - Es liegt im Übrigen im Rahmen der Erfindung, dass der Manipulationsring zumindest bereichsweise bzw. zumindest im Bereich seiner Ausnehmung(en) radial zusammenpressbar bzw. radial aufweitbar ist.

Eine sehr bevorzugte Ausführungsform der Erfindung ist dadurch gekennzeichnet, dass der erfindungsgemäße Steckfitting zwei bzw. zumindest zwei aus dem Basiskörper herausragende Steckzapfen zum Aufstecken jeweils einer Rohrleitung oder dergleichen aufweist. Dabei ist der zweite bzw. der zumindest zweite Steckzapfen ebenfalls von einem Krallring und von einem zumindest bereichsweise transparenten Außengehäuse umgeben. Zweckmäßigerweise wird der zweite bzw. der zumindest zweite Steckzapfen auch von einem Manipulationsring umgeben. Dabei gelten die oben beschriebenen bevorzugten Ausführungsformen bezüglich des Krallringes und/oder bezüglich des Außengehäuses und/oder bezüglich des Manipulationsringes nach empfohlener Ausführungsform auch für den zweiten Steckzapfen bzw. für den zumindest zweiten Steckzapfen. Eine Ausführungsvariante der Erfindung zeichnet sich dadurch aus, dass ein Steckfitting linear ausgebildet ist und zwei gegenüberliegende auf der Längsachse des Steckfittings angeordnete Steckzapfen aufweist. Gemäß einer anderen Ausführungsform des erfindungsgemäßen Steckfittings ist der Fitting gewinkelt ausgebildet und die Längsachsen der beiden Steckzapfen des Fittings bilden einen Winkel α ungleich 180°. Der Winkel α zwischen den beiden Steckzapfen dieses erfindungsgemäßen Steckfittings beträgt nach einer bevorzugten Ausführungsform 90° bzw. in etwa 90°. Es liegt auch im Rahmen der Erfindung, dass der erfindungsgemäße Steckfitting drei bzw. zumindest drei Steckzapfen aufweist. Wenn der erfindungsgemäße Steckfitting mit drei Steckzapfen ausgerüstet ist, weist er bevorzugt eine T-Form auf. Die weiter oben zu dem zumindest einen Steckzapfen erläuterten bevorzugten Ausführungsformen gelten - wie bereits angedeutet - auch für den weiteren bzw. die weiteren Steckzapfen des erfindungsgemäßen Steckfittings. Es liegt weiterhin im Rahmen der Erfindung, dass die Mehrzahl von Steckzapfen eines erfindungsgemäßen Steckfittings identisch bzw. im Wesentlichen identisch ausgebildet sind und dass auch die diese Steckzapfen umgebenden Krallringe und/oder Manipulationsringe und/oder die Außengehäuse identisch bzw. im Wesentlichen identisch ausgebildet sind. Insbesondere weist jeder Steckzapfen eines erfindungsgemäßen Steckfittings zumindest einen über den Umfang des Steckzapfens umlaufenden Dichtring, beispielsweise in Form eines O-Ringes auf. Dabei dichtet der Dichtring die Verbindung zwischen Steckfitting und Rohrleitung gegen das durchzuleitende fluide Medium ab.

Gegenstand der Erfindung ist auch eine Steckvorrichtung mit einem Steckfitting und einer Rohrleitung zur Durchleitung eines fluiden Mediums, insbesondere für Trinkwasserinstallationen bzw. Trinkwasseranwendungen, wobei der Steckfitting ein Basisgehäuse und zumindest einen aus dem Basisgehäuse herausragenden Steckzapfen mit darauf aufgesteckter Rohrleitung aufweist, wobei ein den Steckzapfen umgebender Krallring vorhanden ist, wobei der Krallring mit der Maßgabe ausgelegt ist, dass die auf den Steckzapfen aufgeschobene Rohrleitung kraftschlüssig in den Krallring einschiebbar ist und wobei der Steckzapfen und der darauf angeordnete Krallring von einer zumindest bereichsweise transparenten Außenhülse umgeben sind, so dass der Aufsteckfortschritt bzw. der Einschubfortschritt des Rohrleitungsendes von außen erkennbar bzw. kontrollierbar ist.

Es liegt im Rahmen der Erfindung, dass die Steckvorrichtung mit einer zumindest teilringförmig ausgebildeten Entriegelungsvorrichtung ausgestattet ist, welche Entriegelungsvorrichtung auf die aus dem Steckfitting herausragende Rohrleitung aufsteckbar bzw. aufschiebbar ist und vorzugsweise aufrastbar ist, wobei die Entriegelungsvorrichtung einen zumindest teilringförmigen Entriegelungsfortsatz aufweist, wobei die Entriegelungsvorrichtung mit ihrem Entriegelungsfortsatz in die dem Basisgehäuse abgewandte Stirnöffnung der Außenhülse einschiebbar bzw. eindrückbar ist und wobei beim Ziehen des Aggregates aus Rohrleitung und Krallring zur Entriegelungsvorrichtung hin bzw. gegen die auf der Rohrleitung festgehaltene Entriegelungsvorrichtung der Krallring radial aufweitbar ist und dadurch die Rohrleitung aus dem Steckfitting bzw. aus dem Krallring herausziehbar ist. Somit kann die Steckverbindung zwischen Steckfitting und Rohrleitung mittels der Entriegelungsvorrichtung auf einfache und wenig aufwendige Weise gelöst werden.

Nach besonders bevorzugter Ausführungsform der erfindungsgemäßen Steckvorrichtung ist zwischen dem Krallring und der Stirnöffnung der Außenhülse ein Manipulationsring angeordnet, wobei beim Ziehen des Aggregates aus Rohrleitung und Krallring der Krallring gegen den Manipulationsring gezogen bzw. gedrückt wird und dabei der Krallring radial aufgeweitet wird, so dass die Rohrleitung aus dem Steckfitting bzw. aus dem Krallring des Steckfittings herausziehbar ist.

Der Erfindung liegt die Erkenntnis zugrunde, dass bei dem erfindungsgemäßen Steckfitting bzw. bei der erfindungsgemäßen Steckvorrichtung der Fortschritt bzw. die Vollständigkeit des Aufschiebens/Aufsteckens der Rohrleitung auf den Steckzapfen auf einfache, wenig aufwendige und funktionssichere Weise feststellbar ist. Dadurch wird effektiv vermieden, dass unvollständige bzw. undichte Verbindungen zwischen Steckfitting und Rohrleitung resultieren. Hervorzuheben ist auch, dass sowohl das Herstellen der Verbindung zwischen Steckfitting und Rohrleitung als auch das Lösen dieser Verbindung auf einfache und wenig kraftaufwendige Weise möglich ist. Zu betonen ist weiterhin, dass der erfindungsgemäße Steckfitting bzw. die erfindungsgemäße Steckvorrichtung auf einfache und kostengünstige Weise realisierbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Steckvorrichtung aus einem Steckfitting und einer daran angeschlossenen Rohrleitung,
- Fig. 2: den Gegenstand gemäß Fig. 1 in einer weiteren Funktionsstellung mit geringfügig herausgezogener Rohrleitung,
- Fig. 3: eine Explosionsdarstellung der erfindungsgemäßen Steckvorrichtung,
- Fig. 4: eine perspektivische Darstellung des Krallringes des erfindungsgemäßen Steckfittings,
- Fig. 5: eine perspektivische Darstellung des Manipulationsringes des erfindungsgemäßen Steckfittings,
- Fig. 6: eine Seitenansicht der erfindungsgemäßen Steckvorrichtung im Schnitt (rechte Hälfte),
- Fig. 7: den Gegenstand nach Fig. 6 mit einer erfindungsgemäßen Entriegelungsvorrichtung beim Entriegeln der Verbindung zwischen Steckfitting und Rohrleitung und
- Fig. 8: eine Außenhülse eines erfindungsgemäßen Steckfittings in einer weiteren Ausführungsform im Schnitt.

Die Figuren zeigen einen erfindungsgemäßen Steckfitting 1, insbesondere für Trinkwasseranwendungen - mit einem Basisgehäuse 2. Bevorzugt und im Ausführungsbeispiel weist der Steckfitting 1 zwei aus dem Basisgehäuse 2 herausragende Steckzapfen 3 zum Aufstecken jeweils einer Rohrleitung 4 auf. Steckfitting 1 und Rohrleitung 4 bzw. Rohrleitungen 4 ergänzen sich zu einer erfindungsgemäßen Steckvorrichtung. Nach einer Ausführungsvariante der Erfindung und im Ausführungsbeispiel ist der Steckfitting 1 als linearer Steckfitting 1 mit zwei gegenüberliegenden parallel zur Längsachse L des Fittings 1 angeordneten Steckzapfen 3 ausgebildet. Bevorzugt und im Ausführungsbeispiel weisen beide Steckzapfen 3 im Übrigen ein jeweils über den Umfang des Steckzapfens 3 umlaufendes Sägezahnprofil auf. Weiterhin ist jeder Steckzapfen 3 empfohlenermaßen und im Ausführungsbeispiel mit einem über den Außenumfang des Steckzapfens 3 umlaufenden Dichtring 23 ausgestattet. Es liegt im Rahmen der Erfindung, dass der Steckzapfen 3 bzw. die Steckzapfen 3 eines erfindungsgemäßen Steckfittings 1 mit der Maßgabe ausgebildet sind, dass jeweils eine Rohrleitung 4 kraftschlüssig und/oder formschlüssig auf den Steckzapfen 3 aufschiebbar ist. Es versteht sich, dass der Steckfitting 1 bzw. das Basisgehäuse 2 und die Steckzapfen 3 des Steckfittings 1 innen hohl zur Durchleitung eines durch eine Rohrleitung 4 geführten fluiden Mediums eingerichtet sind.

Erfindungsgemäß ist ein einen Steckzapfen 3 umgebender Krallring 5 vorhanden, wobei der Krallring 5 mit der Maßgabe ausgelegt ist, dass die auf den Steckzapfen 3 aufgeschobene Rohrleitung 4 kraftschlüssig und/oder formschlüssig in den Krallring 5 zwischen Steckzapfen 3 und Krallring 5 einschiebbar ist. - Nach besonders bevorzugter Ausführungsform ist im Übrigen an der dem Basisgehäuse 2 abgewandten Seite des Krallringes 5 ein einen Steckzapfen 3 umgebender Manipulationsring 15 vorgesehen. Zweckmäßigerweise ist die auf einen Steckzapfen 3 aufgesteckte bzw. aufzusteckende Rohrleitung 4 kraftschlüssig und/oder formschlüssig in den Manipulationsring 15 einschiebbar. Es liegt im Rahmen der Erfindung, dass der Manipulationsring 15 gleichsam zur Abstützung der auf den zugeordneten Steckzapfen 3 aufgesteckten Rohrleitung 4 dient.

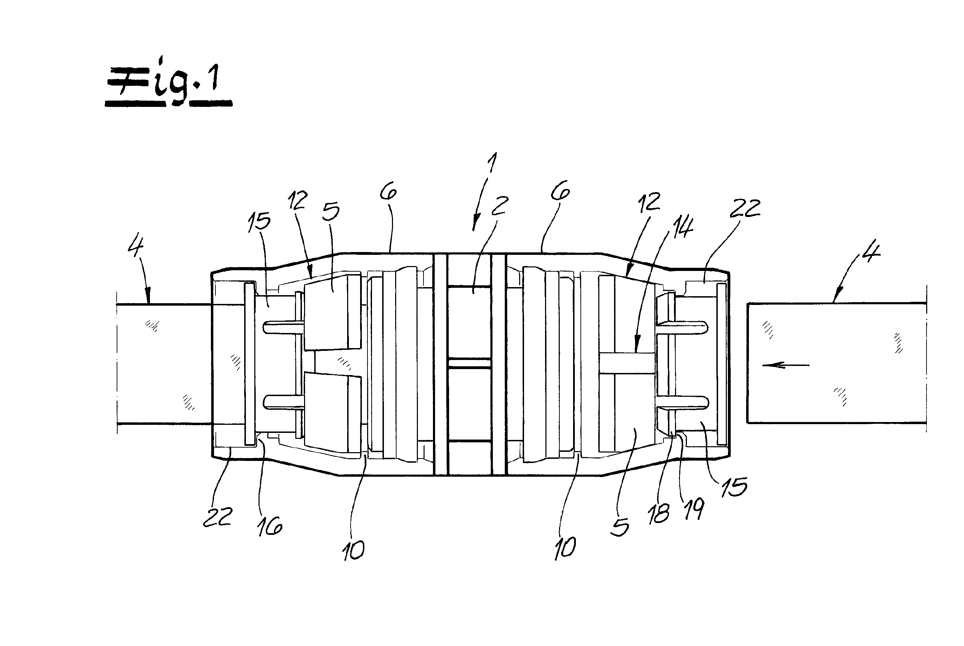

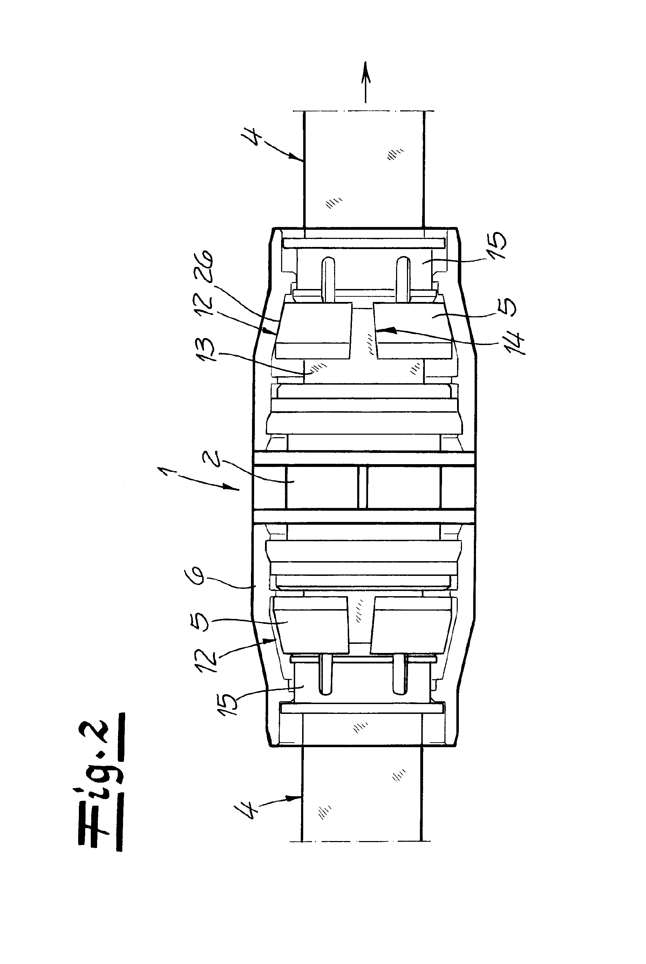

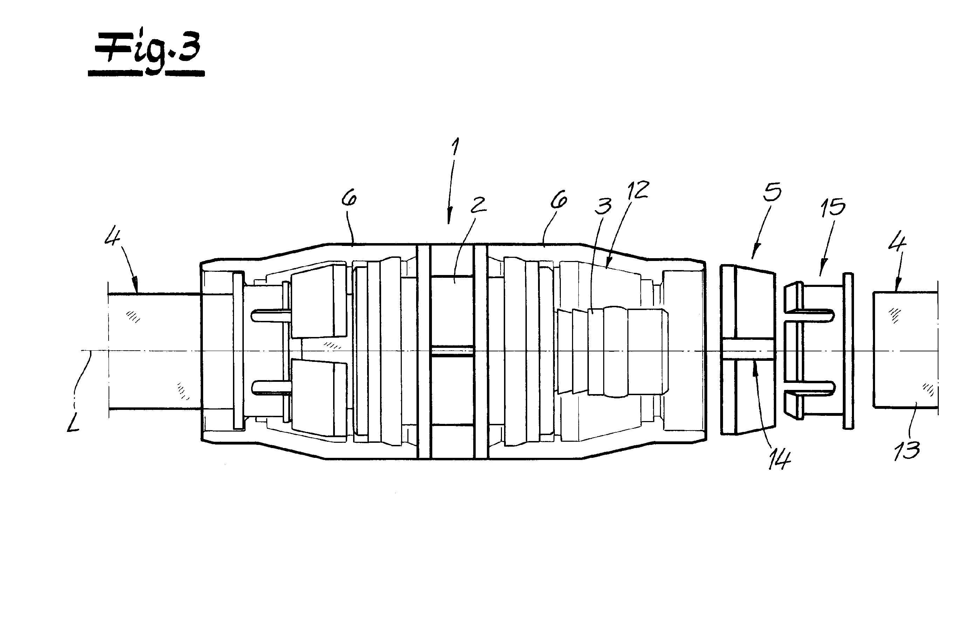

Nach einer bevorzugten Ausführungsform der Erfindung und im Ausführungsbeispiel nach den Fig. 1 bis 3 sowie 6 und 7 ist ein Steckzapfen 3 sowie der darauf angeordnete Krallring 5 und der weiterhin darauf vorzugsweise angeordnete Manipulationsring 15 von einer transparenten bzw. durchsichtigen Außenhülse 6 umgeben, so dass der Aufsteckfortschritt bzw. der Einschubfortschritt einer Rohrleitung 4 auf den Steckfitting 1 von außen durch die transparente Außenhülse 6 erkennbar bzw. kontrollierbar ist. Das wird weiter unten anhand einer vergleichenden Betrachtung der Fig. 1 und 2 noch erläutert. Im Ausführungsbeispiel nach den Fig. 1 bis 3 sowie 6 und 7 ist die gesamte Außenhülse 6 transparent bzw. die gesamte Außenhülse 6 im Wesentlichen transparent ausgebildet.

Nach besonders empfohlener Ausführungsform und im Ausführungsbeispiel ist die Außenhülse 6 an dem Basisgehäuse 2 des Fittings 1 fixiert und zwar bevorzugt und im Ausführungsbeispiel mit dem Basisgehäuse 2 verrastet. Empfohlenermaßen und im Ausführungsbeispiel weist dazu das Basisgehäuse 2 eine umlaufende Rastnut 24 auf, in die ein umlaufender Rastring 25 der Außenhülse 6 einrastbar ist. Auf diese Weise wird eine Relativbewegung zwischen Basisgehäuse 2 und Außenhülse 6 in Längsrichtung des Fittings 1 vermieden bzw. weitgehend vermieden.

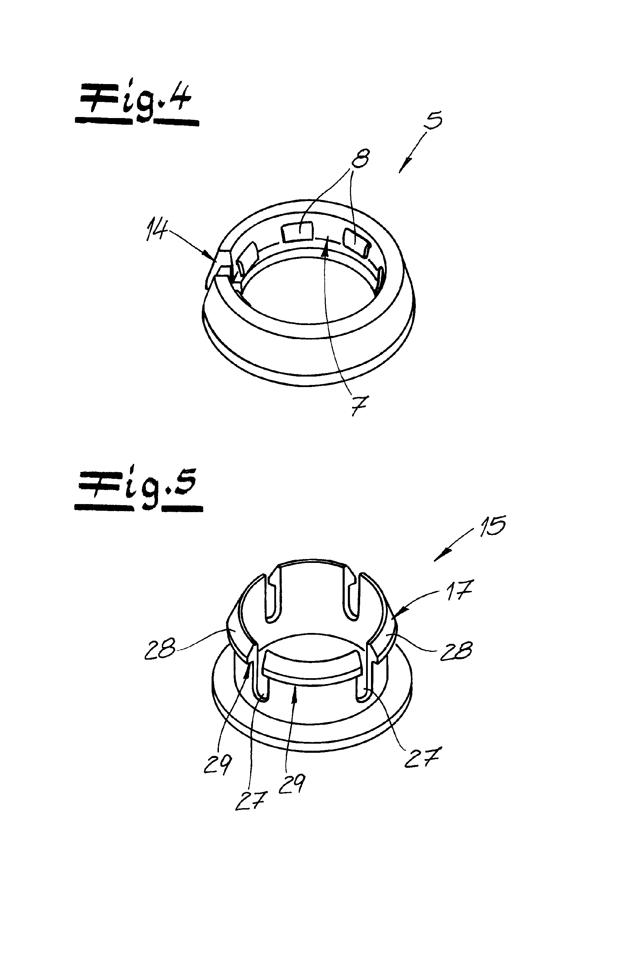

Gemäß besonders bevorzugter Ausführungsform der Erfindung und im Ausführungsbeispiel weist der Krallring 5 an seiner steckzapfenseitigen Innenoberfläche 7 eine Mehrzahl von über den Innenumfang des Krallringes 5 verteilte Widerhaken 8 auf. Beim Einschieben der Rohrleitung 4 in den Krallring 5 kommen diese Widerhaken 8 an der Außenoberfläche 9 der Rohrleitung 4 zur Anlage bzw. verhaken/verkrallen sich in der Außenoberfläche 9 der Rohrleitung 4. Auf diese Weise kann insbesondere eine kraftschlüssige Aufnahme der Rohrleitung 4 in dem zugeordneten Krallring 5 gewährleistet werden. Zweckmäßigerweise und im Ausführungsbeispiel sind die über den Innenumfang des Krallringes 5 verteilten Widerhaken 8 als metallische in Richtung des Basisgehäuses 2 ausgerichtete Haken ausgebildet (siehe insbesondere Fig. 4).
Nach bewährter Ausführungsform und im Ausführungsbeispiel weist die Außenhülse 6 einen ersten Anschlagring 10 auf. Der Krallring 5 wird bei Kraftbeaufschlagung in Längsrichtung des Fittings 1 zum Basisgehäuse 2 hin - insbesondere bei Kraftbeaufschlagung durch die eingeschobene Rohrleitung 4 - gegen den ersten Anschlagring 10 gedrückt. Dadurch wird die Längsbewegung des Krallringes 5 in Richtung Basisgehäuse 2 begrenzt. Es liegt im Rahmen der Erfindung, dass der Krallring 5 eine entsprechende Anschlagschulter zur Anlage an dem ersten Anschlagring 10 aufweist. Empfohlenermaßen und im Ausführungsbeispiel ist der den zugeordneten Steckzapfen 3 umgebende Krallring 5 in einem Krallringbereich bzw. in einem Krallringgehäuse 12 der Außenhülse 6 unverlierbar aufgenommen. Der vorstehend beschriebene erste Anschlagring 10 bildet dabei bevorzugt die erste Begrenzung des Krallringgehäuses 12. Vorzugsweise und im Ausführungsbeispiel bildet an der dem Basisgehäuse 2 abgewandeten Seite des Krallringes 5 eine konusförmige Verjüngung 26 der Außenhülse 6 die zweite Begrenzung des Krallringgehäuses 12. Durch diese konusförmige Verjüngung 26 wird die Längsbewegung des Krallringes 5 in Richtung der Stirnöffnung des zugeordneten Steckzapfens 3 begrenzt.

Es liegt im Rahmen der Erfindung, dass die Rohrleitung 4 durch den zugeordneten Krallring 5 über das basisgehäuseseitige Ende des Krallringes 5 hinausschiebbar ist und bevorzugt und im Ausführungsbeispiel gegen eine Stirnfläche 11 des Basisgehäuses 2 geschoben wird. Somit kragt die Rohrleitung 4 nach dem Aufschieben bzw. Einschieben aus dem zugeordneten Krallring 5 vor. Es liegt weiterhin im Rahmen der Erfindung, dass das Aggregat aus dem Krallring 5 und der darin eingeschobenen bzw. aufgenommenen Rohrleitung 4 in Längsrichtung des Fittings 1 verschoben werden kann, insbesondere und im Ausführungsbeispiel in dem Krallringgehäuse 12 zwischen den Begrenzungen des Krallringgehäuses 12 verschoben werden kann. Dabei wird also das genannte Aggregat aus Rohrleitung 4 und Krallring 5 auf dem zugeordneten Steckzapfen 3 des Fittings 1 verschoben, während eine Relativbewegung zwischen Rohrleitung 4 und Krallring 5 nicht bzw. im Wesentlichen nicht stattfindet. Aufgrund der Verschiebung des Aggregates wird durch die transparente Außenhülse 6 in einem Zwischenraum zwischen Basisgehäuse 2 und Krallring 5 das über den Krallring 5 zum Basisgehäuse 2 hin vorkragende Rohrleitungsende 13 sichtbar, so dass dies als Nachweis für den ausreichenden Aufsteck- bzw. Einschubfortschritt der Rohrleitung 4 dienen kann (siehe Fig. 2).

Nach besonders empfohlener Ausführungsform der Erfindung und im Ausführungsbeispiel weist der Krallring 5 eine sich in Längsrichtung des Fittings 1 erstreckende Durchbrechung 14 auf und der Krallring 5 ist aufgrund dieser Durchbrechung 14 radial aufweitbar. Es liegt im Rahmen der Erfindung, dass sich die Durchbrechung 14 über die gesamte Länge des Krallringes 5 erstreckt sowie über die gesamte radiale Dicke des Krallringes 5. Die Durchbrechung 14 bzw. die radiale Aufweitbarkeit des Krallringes 5 ermöglicht es, dass die weiter unten noch beschriebene Verbindung zwischen Fitting 1 und Rohrleitung 4 auf einfache Weise entriegelt bzw. gelöst werden kann.

Zweckmäßigerweise und im Ausführungsbeispiel ist der Manipulationsring 15 des Fittings 1 bei Kraftbeaufschlagung in Längsrichtung des Fittings 1 - insbesondere beim Aufschieben bzw. Einschieben einer Rohrleitung 4 in Längsrichtung des Fittings 1 - gegen einen äußeren Anschlagring 16 der Außenhülse 6 drückbar. Es empfiehlt sich, dass der Manipulationsring 15 dazu einen ringförmigen Anschlagflansch zur Anlage an dem äußeren Anschlagring 16 der Außenhülse 6 aufweist. Auf diese Weise wird die Längsbewegung des Manipulationsringes 15 in Richtung Basisgehäuse 2 eingeschränkt und somit wird ein Vordringen bzw. weiteres Vordringen des Manipulationsringes 15 in den Krallringbereich bzw. in das Krallringgehäuse 12 begrenzt.

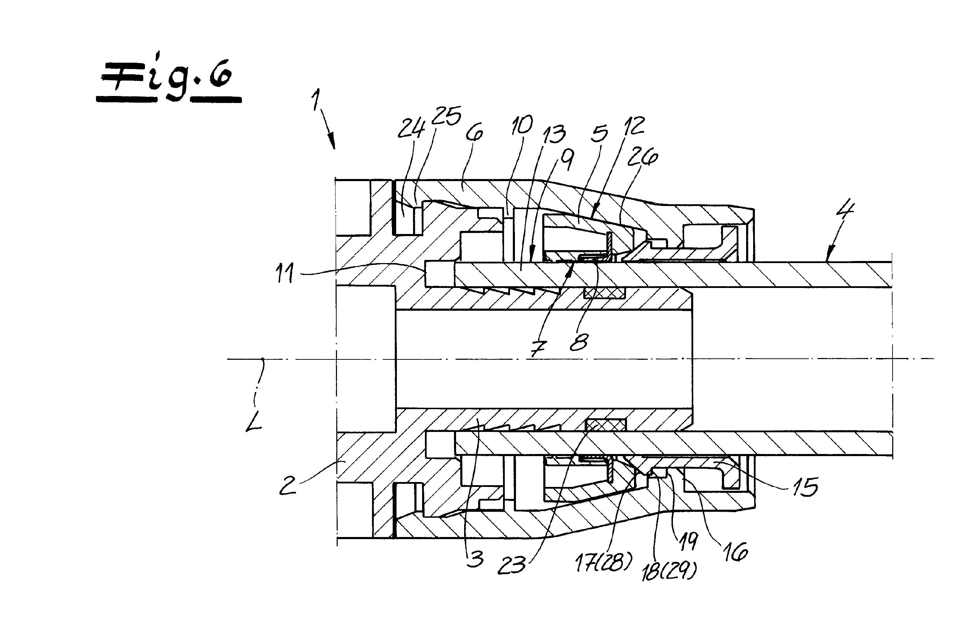

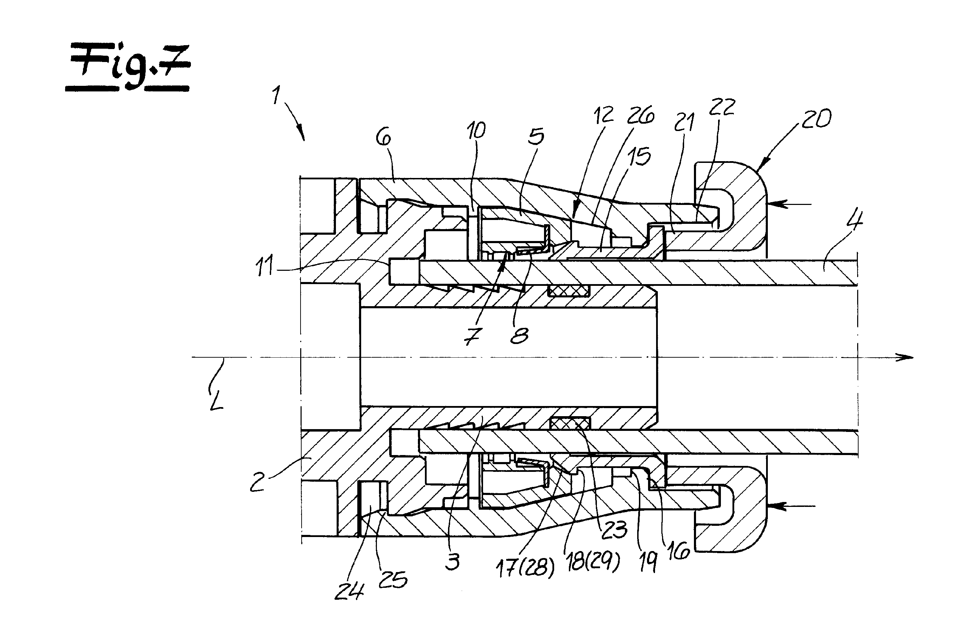

Vorzugsweise und im Ausführungsbeispiel weist der Manipulationsring 15 an seinem basisgehäuseseitigen Ende/Stirnende bereichsweise eine zur Längsachse L des Fittings 1 und zum Krallring 5 hin geneigte/abgeschrägte Manipulationsfläche 17 auf. Aufgrund dieser geneigten bzw. konusförmigen Manipulationsfläche 17 fasst beim Ziehen bzw. Drücken des Krallringes 5 gegen den Manipulationsring 15 der Manipulationsring 15 mit seiner Manipulationsfläche 17 zumindest zum Teil in den Krallring 5 ein, so dass der Krallring 5 dadurch radial aufgeweitet wird. Im Ausführungsbeispiel weist der Manipulationsring 15 über seinen Umfang verteilte und sich in seiner Längsrichtung erstreckende Ausnehmungen 27 auf, wobei sich die Ausnehmungen 27 im Ausführungsbeispiel über lediglich einen Teil der Länge des Manipulationsringes 15 erstrecken. Die Ausnehmungen 27 sind im Ausführungsbeispiel an dem dem Basisgehäuse 2 zugewandeten Ende des Manipulationsringes 15 vorgesehen. Die Ausnehmungen 27 unterteilen die Manipulationsfläche 17 in geneigte bzw. konusförmige Manipulationsflächenabschnitte 28. - Es liegt im Rahmen der Erfindung, dass der Manipulationsring 15 wie im Ausführungsbeispiel eine Anschlagfläche 18 aufweist, welche Anschlagfläche 18 bei einer Bewegung bzw. Verschiebung des Manipulationsringes 15 in Richtung der dem Basisgehäuse 2 abgewandten Seite des Fittings 1 an einem inneren Anschlagring 19 der Außenhülse 6 zur Anlage kommt. Dadurch wird gewährleistet, dass der Manipulationsring 15 unverlierbar in dem Fitting 1 bzw. in der Außenhülse 6 des Fittings 1 gehalten ist. Es liegt im Rahmen der Erfindung, dass die Anschlagfläche 18 als Hinterschneidung hinter der Manipulationsfläche 17 des Manipulationsringes 15 ausgebildet ist. Aufgrund der vorzugsweise und im Ausführungsbeispiel vorgesehenen Ausnehmungen 27 des Manipulationsringes 15 ist die Anschlagfläche 18 in Anschlagflächenabschnitte 29 unterteilt. Insbesondere eine vergleichende Betrachtung der Fig. 6 und 7 verdeutlicht die erfindungsgemäß vorgesehene Entriegelung bzw. das erfindungsgemäß vorgesehene Lösen von Steckfitting 1 und Rohrleitung 4. Im Ausführungsbeispiel ist eine teilringförmig ausgebildete Entriegelungsvorrichtung 20 vorgesehen, welche Entriegelungsvorrichtung 20 auf die aus dem Steckfitting 1 herausragende Rohrleitung 4 aufschiebbar bzw. aufrastbar ist. Die Entriegelungsvorrichtung 20 weist einen teilringförmigen Entriegelungsfortsatz 21 auf, wobei die Entriegelungsvorrichtung 20 mit ihrem Entriegelungsfortsatz 21 in die dem Basisgehäuse abgewandte Stirnöffnung 22 der Außenhülse 6 einschiebbar bzw. eindrückbar ist. Beim Ziehen des Aggregates aus Krallring 5 und Rohrleitung 4 gegen die Entriegelungsvorrichtung 20 bzw. gegen den Entriegelungsfortsatz 21 der Entriegelungsvorrichtung 20 ist der Krallring 5 radial aufweitbar und dadurch die Rohrleitung 4 aus dem Steckfitting 1 bzw. aus dem Krallring 5 herausziehbar. Somit ist ein einfaches Lösen der Steckverbindung zwischen Fitting 1 und Rohrleitung 4 mit Hilfe der Entriegelungsvorrichtung 20 möglich. Vorzugsweise und im Ausführungsbeispiel wird beim Ziehen des Aggregates aus Krallring 5 und Rohrleitung 4 der Krallring 5 gegen den Manipulationsring 15 gezogen bzw. gedrückt. Durch Eindringen der Manipulationsfläche 17 bzw. der Manipulationsflächenabschnitte 28 des Manipulationsringes 15 wird dabei der Krallring 5 radial aufgeweitet, so dass die Rohrleitung 4 auf einfache Weise aus dem Fitting 1 bzw. aus dem Krallring 5 herausziehbar ist.

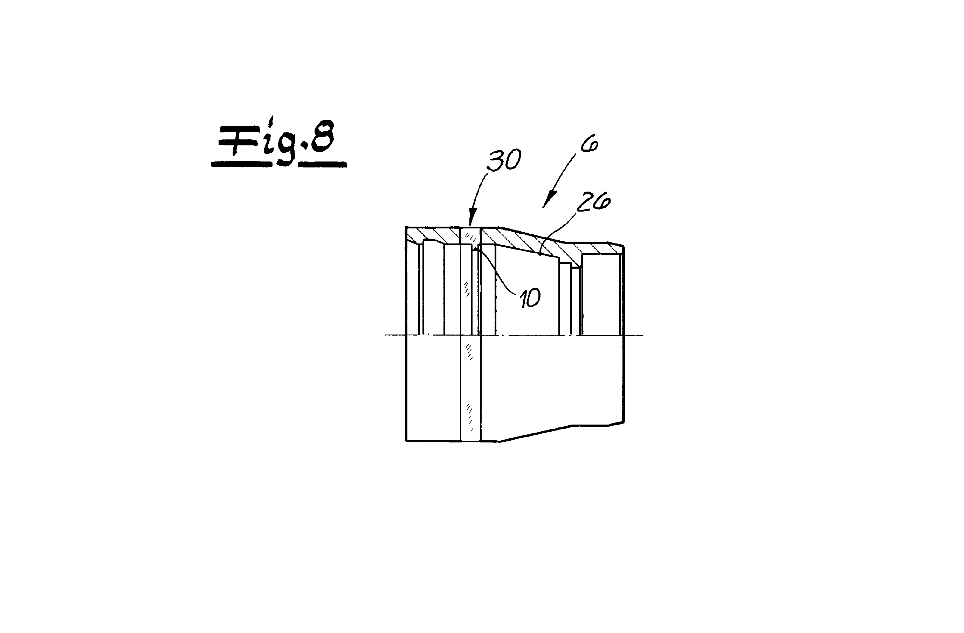

Die Fig. 8 zeigt eine bevorzugte Ausführungsform der Außenhülse 6 eines erfindungsgemäßen Steckfittings. Hier ist lediglich ein ringförmiger transparenter Bereich 30 der Außenhülse 6 vorgesehen. Zweckmäßigerweise läuft dieser transparente Bereich 30 über den gesamten Umfang der Außenhülse 6 um. Über diesen ringförmigen transparenten Bereich 30 kann der Aufsteckfortschritt der Rohrleitung 4 kontrolliert werden bzw. das über den Krallring 5 hin vorkragende Rohrleitungsende 13 gesichtet werden. Bei dieser Ausführungsform sind die übrigen Bereiche der Außenhülse 6 nicht transparent und bevorzugt opak ausgeführt.

## Patentansprüche

1. Steckfitting (1), insbesondere für Trinkwasserinstallationen, - mit einem Basisgehäuse (2) und zumindest einem aus dem Basisgehäuse (2) herausragenden Steckzapfen (3) zum Aufstecken einer Rohrleitung (4), wobei ein den Steckzapfen (3) umgebender Krallring (5) vorhanden ist, wobei der Krallring (5) mit der Maßgabe ausgelegt ist, dass die auf den Steckzapfen (3) aufgeschobene bzw. aufgesteckte Rohrleitung (4) kraftschlüssig in den Krallring (5) einschiebbar ist und wobei der Steckzapfen (3) und der darauf angeordnete Krallring (5) von einer zumindest bereichsweise transparenten Außenhülse (6) umgeben sind, so dass der Aufsteckfortschritt der Rohrleitung (4) von außen erkennbar bzw. kontrollierbar ist.

2. Steckfitting nach Anspruch 1, wobei die zumindest bereichsweise transparente Außenhülse (6) an dem Basisgehäuse (2) des Fittings (1) fixiert ist, zweckmäßigerweise mit dem Basisgehäuse (2) verrastet ist.

3. Steckfitting nach einem der Ansprüche 1 oder 2, wobei der Krallring (5) an seiner steckzapfenseitigen Innenoberfläche (7) zumindest einen Widerhaken (8) aufweist und wobei der zumindest eine Widerhaken (8) beim Einschieben der Rohrleitung (4) in den Krallring (5) an der Außenoberfläche (9) der Rohrleitung (4) zur Anlage kommt.

4. Steckfitting nach einem der Ansprüche 1 bis 3, wobei ein erster Anschlag, insbesondere ein erster Anschlagring (10) vorgesehen ist, wobei der Krallring (5) bei Kraftbeaufschlagung in Längsrichtung des Fittings (1) zum Basisgehäuse (2) hin - insbesondere bei Kraftbeaufschlagung durch die eingeschobene bzw. einzuschiebende Rohrleitung (4) - gegen den ersten Anschlag, insbesondere gegen den ersten Anschlagring (10) drückbar ist/gedrückt wird und wobei nach bevorzugter Ausführungsform der Erfindung der erste Anschlag bzw. Anschlagring (10) Bestandteil des Außengehäuses (6) ist.

5. Steckfitting nach einem der Ansprüche 1 bis 4, wobei der Krallring (5) mit der Maßgabe ausgebildet ist, dass die Rohrleitung (4) durch den Krallring (5) über das basisgehäuseseitige Ende des Krallringes (5) hinausschiebbar ist und dabei bevorzugt gegen eine Stirnfläche (11) des Basisgehäuses (2) schiebbar ist.

6. Steckfitting nach einem der Ansprüche 1 bis 5, wobei der den Steckzapfen (3) umgebende Krallring (5) in einem Krallringbereich bzw. in einem Krallringgehäuse (12) des Fittings (1) unverlierbar aufgenommen ist.

7. Steckfitting nach einem der Ansprüche 1 bis 6, wobei das Aggregat aus Krallring (5) und darin eingeschobener/aufgenommener Rohrleitung (4) in Längsrichtung des Fittings (1) verschiebbar ist - insbesondere in dem Krallringbereich bzw. Krallringgehäuse (12) verschiebbar ist -, so dass ein über den Krallring (5) zum Basisgehäuse (2) hin vorkragendes Rohrleitungsende (13) durch die zumindest bereichsweise transparente Außenhülse (6) sichtbar ist.

8. Steckfitting nach einem der Ansprüche 1 bis 7, wobei der Krallring (5) eine sich in Längsrichtung des Fittings (1) erstreckende Durchbrechung (14) aufweist und wobei der Krallring (5) aufgrund dieser Durchbrechung (14) radial aufweitbar ist.

9. Steckfitting nach einem der Ansprüche 1 bis 8, wobei an der dem Basisgehäuse (2) abgewandten Seite des Krallringes (5) ein den Steckzapfen (3) umgebender Manipulationsring (15) vorgesehen ist und wobei die auf den Steckzapfen (3) aufgesteckte Rohrleitung (4) kraftschlüssig in den Manipulationsring (15) einschiebbar ist.

10. Steckfitting nach Anspruch 9, wobei der Manipulationsring (15) bei Kraftbeaufschlagung in Längsrichtung des Fittings (1) zum Basisgehäuse (2) hin gegen einen äußeren Anschlag, bevorzugt gegen einen äußeren Anschlagring (16) drückbar ist/gedrückt wird, und wobei vorzugsweise der äußere Anschlag bzw. der äußere Anschlagring (16) Bestandteil der Außenhülse (6) ist.

11. Steckfitting nach einem der Ansprüche 9 oder 10, wobei der Manipulationsring (15) an seinem basisgehäuseseitigen Ende bzw. Stirnende zumindest bereichsweise eine zur Längsachse (L) des Fittings und zum Krallring (5) hin geneigte Manipulationsfläche (17) aufweist, so dass beim Ziehen bzw. Drücken des Krallringes (5) gegen den Manipulationsring (15) und/oder umgekehrt die Manipulationsfläche (17) zumindest zum Teil bzw. zum Teil in den Krallring (5) einfasst und der Krallring (5) dadurch radial aufweitbar ist bzw. radial aufgeweitet wird.

12. Steckfitting nach einem der Ansprüche 9 bis 11, wobei der Manipulationsring (15) eine Anschlagfläche (18) aufweist, welche Anschlagfläche (18) bei einer Bewegung bzw. Verschiebung des Manipulationsringes (15) in Richtung der dem Basisgehäuse (2) abgewandten Seite des Fittings (1) an einem inneren Anschlag, insbesondere einem inneren Anschlagring (19) des Fittings (1) und vorzugsweise an einem inneren Anschlag, insbesondere an einem inneren Anschlagring (19) der Außenhülse (6) zur Anlage kommt, so dass der Manipulationsring (15) unverlierbar in dem Fitting (1) bzw. in der Außenhülse (6) gehalten ist.

13. Steckfitting nach einem der Ansprüche 1 bis 12, wobei entweder die gesamte Außenhülse (6) bzw. im Wesentlichen die gesamte Außenhülse (6) transparent ausgebildet ist oder wobei die Außenhülse (6) einen - insbesondere ringförmigen - transparenten Bereich (30) bzw. Sichtbereich zur Kontrolle des Aufsteckfortschritts der Rohrleitung (4) aufweist und wobei die übrigen Bereiche der Außenhülse (6) nicht transparent bzw. bevorzugt opak ausgeführt sind.

14. Steckvorrichtung mit einem Steckfitting (1) - insbesondere nach einem der Ansprüche 1 bis 13 -, und einer Rohrleitung (4) zur Durchleitung eines fluiden Mediums, insbesondere für Trinkwasserinstallationen bzw. Trinkwasseranwendungen, wobei der Steckfitting (1) ein Basisgehäuse (2) und zumindest einen aus dem Basisgehäuse (2) herausragenden Steckzapfen (3) mit darauf aufgesteckter Rohrleitung (4) aufweist, wobei ein den Steckzapfen (3) umgebender Krallring (5) vorhanden ist, wobei der Krallring (5) mit der Maßgabe ausgelegt ist, dass die auf den Steckzapfen (3) aufgeschobene Rohrleitung (4) kraftschlüssig in den Krallring (5) einschiebbar ist und wobei der Steckzapfen (3) und der darauf angeordnete Krallring (5) von einer zumindest bereichsweise transparenten Außenhülse (6) umgeben sind, so dass der Aufsteckfortschritt bzw. der Einschubfortschritt der Rohrleitung (4) von außen durch die Außenhülse (6) erkennbar bzw. kontrollierbar ist.

15. Steckvorrichtung nach Anspruch 14, wobei eine zumindest teilringförmig ausgebildete Entriegelungsvorrichtung (20) vorgesehen ist, welche Entriegelungsvorrichtung (20) auf die aus dem Steckfitting (1) herausragende Rohrleitung (4) aufsteckbar und/oder aufschiebbar ist, wobei die Entriegelungsvorrichtung (20) einen zumindest teilringförmigen Entriegelungsfortsatz (21) aufweist, wobei die Entriegelungsvorrichtung (20) mit ihrem Entriegelungsfortsatz (21) in die dem Basisgehäuse (2) abgewandte Stirnöffnung (22) der Außenhülse (6) einschiebbar bzw. eindrückbar ist und wobei beim Ziehen des Aggregate aus Rohrleitung (4) und Krallring (5) gegen die Entriegelungsvorrichtung (20) hin der Krallring (5) radial aufweitbar ist und die Rohrleitung (4) aus dem Steckfitting (1) bzw. aus dem Krallring (5) herausziehbar ist.

16. Steckvorrichtung nach Anspruch 15, wobei zwischen Krallring (5) und der Stirnöffnung (22) der Außenhülse (6) ein Manipulationsring (15) angeordnet ist, wobei beim Ziehen des Aggregates aus Rohrleitung (4) und Krallring (5) der Krallring (5) gegen den Manipulationsring (15) gezogen bzw. gedrückt wird und dabei der Krallring (5) radial aufgeweitet wird.

## Geänderte Patentansprüche

### Geänderte Patentansprüche gemäss Regel 137(2) EPÜ.

1. Steckfitting (1), insbesondere für Trinkwasserinstallationen, - mit einem Basisgehäuse (2) und zumindest einem aus dem Basisgehäuse (2) herausragenden Steckzapfen (3) zum Aufstecken einer Rohrleitung (4), wobei ein den Steckzapfen (3) umgebender Krallring (5) vorhanden ist, wobei der Krallring (5) mit der Maßgabe ausgelegt ist, dass die auf den Steckzapfen (3) aufgeschobene bzw. aufgesteckte Rohrleitung (4) kraftschlüssig in den Krallring (5) einschiebbar ist und wobei der Steckzapfen (3) und der darauf angeordnete Krallring (5) von einer zumindest bereichsweise transparenten Außenhülse (6) umgeben sind, so dass der Aufsteckfortschritt der Rohrleitung (4) von außen erkennbar bzw. kontrollierbar ist,
wobei die Außenhülse (6) zumindest über dem zwischen Krallring (5) und Basisgehäuse (2) gebildeten Zwischenraum transparent ausgebildet ist und wobei der übrige Bereich der Außenhülse (6) opak bzw nicht transparent ausgebildet ist.

2. Steckfitting nach Anspruch 1, wobei die zumindest bereichsweise transparente Außenhülse (6) an dem Basisgehäuse (2) des Fittings (1) fixiert ist, zweckmäßigerweise mit dem Basisgehäuse (2) verrastet ist.

3. Steckfitting nach einem der Ansprüche 1 oder 2, wobei der Krallring (5) an seiner steckzapfenseitigen Innenoberfläche (7) zumindest einen Widerhaken (8) aufweist und wobei der zumindest eine Widerhaken (8) beim Einschieben der Rohrleitung (4) in den Krallring (5) an der Außenoberfläche (9) der Rohrleitung (4) zur Anlage kommt.

4. Steckfitting nach einem der Ansprüche 1 bis 3, wobei ein erster Anschlag, insbesondere ein erster Anschlagring (10) vorgesehen ist, wobei der Krallring (5) bei Kraftbeaufschlagung in Längsrichtung des Fittings (1) zum Basisgehäuse (2) hin - insbesondere bei Kraftbeaufschlagung durch die eingeschobene bzw. einzuschiebende Rohrleitung (4) - gegen den ersten Anschlag, insbesondere gegen den ersten Anschlagring (10) drückbar ist/gedrückt wird und wobei nach bevorzugter Ausführungsform der Erfindung der erste Anschlag bzw. Anschlagring (10) Bestandteil des Außengehäuses (6) ist.

5. Steckfitting nach einem der Ansprüche 1 bis 4, wobei der Krallring (5) mit der Maßgabe ausgebildet ist, dass die Rohrleitung (4) durch den Krallring (5) über das basisgehäuseseitige Ende des Krallringes (5) hinausschiebbar ist und dabei bevorzugt gegen eine Stirnfläche (11) des Basisgehäuses (2) schiebbar ist.

6. Steckfitting nach einem der Ansprüche 1 bis 5, wobei der den Steckzapfen (3) umgebende Krallring (5) in einem Krallringbereich bzw. in einem Krallringgehäuse (12) des Fittings (1) unverlierbar aufgenommen ist.

7. Steckfitting nach einem der Ansprüche 1 bis 6, wobei das Aggregat aus Krallring (5) und darin eingeschobener/aufgenommener Rohrleitung (4) in Längsrichtung des Fittings (1) verschiebbar ist - insbesondere in dem Krallringbereich bzw. Krallringgehäuse (12) verschiebbar ist -, so dass ein über den Krallring (5) zum Basisgehäuse (2) hin vorkragendes Rohrleitungsende (13) durch die zumindest bereichsweise transparente Außenhülse (6) sichtbar ist.

8. Steckfitting nach einem der Ansprüche 1 bis 7, wobei der Krallring (5) eine sich in Längsrichtung des Fittings (1) erstreckende Durchbrechung (14) aufweist und wobei der Krallring (5) aufgrund dieser Durchbrechung (14) radial aufweitbar ist.

9. Steckfitting nach einem der Ansprüche 1 bis 8, wobei an der dem Basisgehäuse (2) abgewandten Seite des Krallringes (5) ein den Steckzapfen (3) umgebender Manipulationsring (15) vorgesehen ist und wobei die auf den Steckzapfen (3) aufgesteckte Rohrleitung (4) kraftschlüssig in den Manipulationsring (15) einschiebbar ist.

10. Steckfitting nach Anspruch 9, wobei der Manipulationsring (15) bei Kraftbeaufschlagung in Längsrichtung des Fittings (1) zum Basisgehäuse (2) hin gegen einen äußeren Anschlag, bevorzugt gegen einen äußeren Anschlagring (16) drückbar ist/gedrückt wird, und wobei vorzugsweise der äußere Anschlag bzw. der äußere Anschlagring (16) Bestandteil der Außenhülse (6) ist.

11. Steckfitting nach einem der Ansprüche 9 oder 10, wobei der Manipulationsring (15) an seinem basisgehäuseseitigen Ende bzw. Stirnende zumindest bereichsweise eine zur Längsachse (L) des Fittings und zum Krallring (5) hin geneigte Manipulationsfläche (17) aufweist, so dass beim Ziehen bzw. Drücken des Krallringes (5) gegen den Manipulationsring (15) und/oder umgekehrt die Manipulationsfläche (17) zumindest zum Teil bzw. zum Teil in den Krallring (5) einfasst und der Krallring (5) dadurch radial aufweitbar ist bzw. radial aufgeweitet wird.

12. Steckfitting nach einem der Ansprüche 9 bis 11, wobei der Manipulationsring (15) eine Anschlagfläche (18) aufweist, welche Anschlagfläche (18) bei einer Bewegung bzw. Verschiebung des Manipulationsringes (15) in Richtung der dem Basisgehäuse (2) abgewandten Seite des Fittings (1) an einem inneren Anschlag, insbesondere einem inneren Anschlagring (19) des Fittings (1) und vorzugsweise an einem inneren Anschlag, insbesondere an einem inneren Anschlagring (19) der Außenhülse (6) zur Anlage kommt, so dass der Manipulationsring (15) unverlierbar in dem Fitting (1) bzw. in der Außenhülse (6) gehalten ist.

13. Steckfitting nach einem der Ansprüche 1 bis 12, wobei entweder die gesamte Außenhülse (6) bzw. im Wesentlichen die gesamte Außenhülse (6) transparent ausgebildet ist oder wobei die Außenhülse (6) einen - insbesondere ringförmigen - transparenten Bereich (30) bzw. Sichtbereich zur Kontrolle des Aufsteckfortschritts der Rohrleitung (4) aufweist und wobei die übrigen Bereiche der Außenhülse (6) nicht transparent bzw. bevorzugt opak ausgeführt sind.

14. Steckvorrichtung mit einem Steckfitting (1) - insbesondere nach einem der Ansprüche 1 bis 13 -, und einer Rohrleitung (4) zur Durchleitung eines fluiden Mediums, insbesondere für Trinkwasserinstallationen bzw. Trinkwasseranwendungen, wobei der Steckfitting (1) ein Basisgehäuse (2) und zumindest einen aus dem Basisgehäuse (2) herausragenden Steckzapfen (3) mit darauf aufgesteckter Rohrleitung (4) aufweist, wobei ein den Steckzapfen (3) umgebender Krallring (5) vorhanden ist, wobei der Krallring (5) mit der Maßgabe ausgelegt ist, dass die auf den Steckzapfen (3) aufgeschobene Rohrleitung (4) kraftschlüssig in den Krallring (5) einschiebbar ist und wobei der Steckzapfen (3) und der darauf angeordnete Krallring (5) von einer zumindest bereichsweise transparenten Außenhülse (6) umgeben sind, so dass der Aufsteckfortschritt bzw. der Einschubfortschritt der Rohrleitung (4) von außen durch die Außenhülse (6) erkennbar bzw. kontrollierbar ist,
wobei die Außenhülse (6) zumindest über dem zwischen Krallring (5) und Basisgehäuse (2) gebildeten Zwischenraum transparent ausgebildet ist und wobei der übrige Bereich der Außenhülse (6) opak bzw. nicht transparent ausgebildet ist.

15. Steckvorrichtung nach Anspruch 14, wobei eine zumindest teilringförmig ausgebildete Entriegelungsvorrichtung (20) vorgesehen ist, welche Entriegelungsvorrichtung (20) auf die aus dem Steckfitting (1) herausragende Rohrleitung (4) aufsteckbar und/oder aufschiebbar ist, wobei die Entriegelungsvorrichtung (20) einen zumindest teilringförmigen Entriegelungsfortsatz (21) aufweist, wobei die Entriegelungsvorrichtung (20) mit ihrem Entriegelungsfortsatz (21) in die dem Basisgehäuse (2) abgewandte Stirnöffnung (22) der Außenhülse (6) einschiebbar bzw. eindrückbar ist und wobei beim Ziehen des Aggregate aus Rohrleitung (4) und Krallring (5) gegen die Entriegelungsvorrichtung (20) hin der Krallring (5) radial aufweitbar ist und die Rohrleitung (4) aus dem Steckfitting (1) bzw. aus dem Krallring (5) herausziehbar ist.

16. Steckvorrichtung nach Anspruch 15, wobei zwischen Krallring (5) und der Stirnöffnung (22) der Außenhülse (6) ein Manipulationsring (15) angeordnet ist, wobei beim Ziehen des Aggregates aus Rohrleitung (4) und Krallring (5) der Krallring (5) gegen den Manipulationsring (15) gezogen bzw. gedrückt wird und dabei der Krallring (5) radial aufgeweitet wird.
